(19) Europäisches Patentamt
European Patent Office
Office européen des brevets

(11) Veröffentlichungsnummer: **0 403 673 B1**

(12) **EUROPÄISCHE PATENTSCHRIFT**

(45) Veröffentlichungstag der Patentschrift: **24.11.93**

(51) Int. Cl.5: **G01G 23/10**, G01G 3/00, G01D 11/10

(21) Anmeldenummer: **89111216.1**

(22) Anmeldetag: **20.06.89**

(54) **Verfahren und Messeinrichtung zur Bestimmung mechanischer Messgrössen, insbesondere eines unbekannten Gewichts.**

(43) Veröffentlichungstag der Anmeldung:
**27.12.90 Patentblatt 90/52**

(45) Bekanntmachung des Hinweises auf die Patenterteilung:
**24.11.93 Patentblatt 93/47**

(84) Benannte Vertragsstaaten:
**AT BE CH DE ES FR GB GR IT LI LU NL SE**

(56) Entgegenhaltungen:
**DE-A- 2 456 479**
**DE-A- 2 732 052**
**DE-A- 3 743 897**
**FR-A- 1 279 470**

**INSTRUMENTS AND CONTROL SYSTEMS, Band 43, Nr. 2, Februar 1970, Seiten 81-83; F.L. CROSSWY et al.: "Dynamic force measurement techniques"**

**SOVIET INVENTIONS ILLUSTRATED, Woche 8704, 28. Januar 1987, Nr. 87-028454/04, Derwent Publications Ltd, London, GB; & SU-A-1 236 319 (SOKOLOV VN) 24-09-1984**

(73) Patentinhaber: **ATOMA GESELLSCHAFT FÜR AUTOMATISCHE WAAGEN GMBH**
**Postfach 102**
**D-84478 Waldkraiburg(DE)**

(72) Erfinder: **Horn, Klaus, Prof. Dr.-Ing.**
**Sanddornweg 10a**
**D-3300 Braunschweig(DE)**

(74) Vertreter: **Hoffmann, Klaus, Dr. rer. nat. et al**
**Hoffmann, Eitle & Partner**
**Patentanwälte**
**Postfach 81 04 20**
**D-81904 München (DE)**

EP 0 403 673 B1

## Beschreibung

Die vorliegende Erfindung betrifft ein Verfahren und eine Meßeinrichtung zur Bestimmung mechanischer Meßgrößen, insbesondere eines unbekannten Gewichts unter Zuhilfenahme einer gesteuerten aktiven Dämpfung.

Die FR-A-12 79 470 betrifft eine Balkenwaage, bei der aufgrund eines an einem Ende eines Balkens plazierten unbekannten Gewichts eine Auslenkung des Balkens bewirkt wird. Wenn der Balken einen stationären Zustand angenommen hat, kann das unbekannte Gewicht aufgrund der erreichten Auslenkung des Balkens bestimmt werden. Um Schwingungen des Balkens zur Erreichung der stationären Gleichgewichtslage mit aufgelegtem Gewicht zu vermeiden, erzeugt eine Steuereinrichtung zu einem vorbestimmten Zeitpunkt einen kurzzeitig davor wirkenden, sehr großen Reibungskoeffizienten oder Ruhestoß. Somit wird der stationäre Gleichgewichtszustand ohne Überschwingen erreicht, wodurch die Zeit zum Einstellen des stationären Gleichgewichtszustandes herabgesetzt wird.

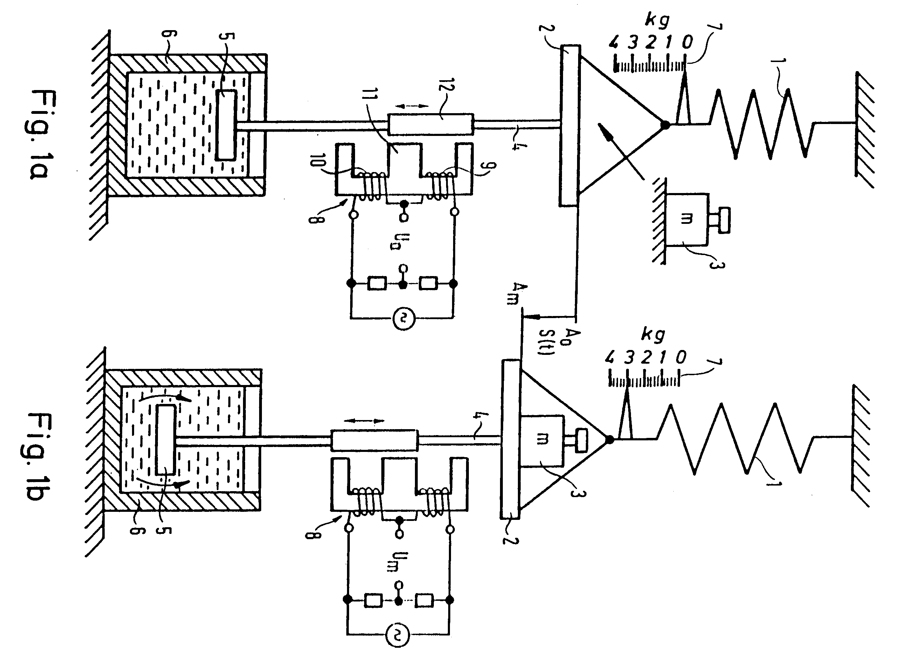

Ferner gibt es Verfahren (Figuren 1a, b) zur Bestimmung mechanischer Meßgrößen, insbesondere eines unbekannten Gewichts, bei denen sich eine Meßfeder unter dem Einfluß der zu bestimmenden Meßgröße elastisch verformt, die mechanische Meßgröße mittels eines wegfühlenden Meßaufnehmers in ein proportionales elektrisches Meßsignal umgeformt und die bei sprunghafter Änderung der Meßgröße auftretende schwingungsförmige Verlagerung der bewegten Elemente der Meßrichtung gedämpft wird.

Eine für ein derartiges Verfahren vorgesehene Meßeinrichtung zur Bestimmung mechanischer Meßgrößen, insbesondere eines unbekannten Gewichts, umfaßt beispielsweise eine Meßfeder, die sich unter dem Einfluß der zu bestimmenden Meßgröße elastisch verformt, einen wegfühlenden Meßaufnehmer, der die mechanische Meßgröße in ein proportionales elektrisches Meßsignal umformt und eine Dämpfungseinrichtung zur Dämpfung der bei sprunghafter Änderung der Meßgröße auftretenden, schwingungsförmigen Verlagerung der bewegten Elemente der Meßeinrichtung.

Bei derartigen Meßeingrichtungen für die Bestimmung mechanischer Meßgrößen, wie z.B. Kraft, Drehmoment, Druck, Weg, Winkel oder Gewicht, werden elastische Federelemente verwendet, die bei der Messung proportional zur Meßgröße ausgelenkt werden. Diese Auslenkungen lassen sich beispielsweise mittels kapazitiver, induktiver oder Ohm'scher Wegaufnehmer in elektrische Meßsignale umformen. Dabei speichert die Meßfeder über den jeweiligen Meßbereich der Meßgröße hinweg eine elastische, d.h. potentielle Energie, in sich auf, welche von der Meßgrößenquelle, also dem Meßobjekt, aufzubringen ist. In aller Regel ist das Meßobjekt selbst körperlicher Natur und ist dementsprechend trägheitsbehaftet; es besitzt also beispielsweise eine schwere Masse, ein Trägheitsmoment oder eine Strömungsträgheit. Die ebenfalls trägheitsbehafteten bewegten Elemente der Meßeinrichtung bilden zusammen mit dem Meßobjekt und den Elastizitäten der Meßfeder ein schwingungsfähiges mechanisches System, das sich je nach dem Dämpfungsgrad dieses Systems nach einer Änderung der Meßgröße erst nach Ausführung eines mehr oder weniger ausgeprägten Einschwingvorgangs auf die neue stationäre Gleichgewichtslage einstellt. Die Periodendauer dieser Einschwingzyklen ist um so größer, je größer die Trägheit der bewegten Elemente und des Meßobjekts und je größer die Nachgiebigkeit der Meßfeder sind. Das Einschwingen der bewegten Elemente auf die dem veränderten Betrag der Meßgröße entsprechende, neue Gleichgewichtslage dauert um so länger, je geringer die natürliche Dämpfung des Systems ist. Hierbei werden unter dem Begriff "Dämpfung" auf die bewegten Elemente einwirkende Kräfte verstanden, die von der Verlagerungsgeschwindigkeit proportional abhängig sind. Überschwingungen über den jeweils neuen Gleichgewichtszustand hinaus treten auf, sofern die Dämpfung einen bestimmten Wert, die sog. kritische Dämpfung, nicht überschreitet. Je stärker das schwingungsfähige System bedämpft ist, desto größer ist auch die Periodendauer der Schwingung, welche von den bewegten Elementen der Meßeinrichtung um die neue Gleichgewichtslage ausgeführt wird. Übersteigt die Dämpfung den Wert der kritischen Dämpfung, treten keinerlei Überschwingungen mehr auf; stattdessen nähert sich das System nur noch langsam asymptotisch der stationären Gleichgewichtslage.

In der meßtechnischen Praxis hat man ein besonderes Interesse daran, daß die Meßeinrichtung möglichst schnell nach einer erfolgten Änderung der Meßgröße einen Meßwert für die Meßgrößenänderung bzw. deren neuen Absolutwert liefert. Es sind verschiedene Methoden bekannt, um in kürzestmöglicher Zeit den gewünschten Meßwert zu erhalten:

Die Meßeinrichtung kann mittels geeigneter mechanischer Dämpfungselemente, also beispielsweise Luft- oder Flüssigkeitsdämpfer, so bedämpft werden, daß sie möglichst in der Nähe der kritischen Dämpfung betrieben wird. Es kann auch ein geringfügiges Überschwingen in Kauf genommen werden. In jedem Fall ergeben sich Einstellzeiten bis zum Erreichen des stationären Gleichgewichtszustands, welche ein Vielfaches der Periodendauer des ungedämpften Systems betragen.

Eine andere Möglichkeit der schnellen Meßwertgewinnung besteht darin, daß das elektrische Meßsignal über analoge Filter geschickt wird, deren obere Grenzfrequenz unterhalb der Frequenz des Einschwingvorgangs liegt, wobei das schwingungsfähige System der Meßeinrichtung selbst entweder überhaupt nicht oder mit zusätzlichen mechanischen Mitteln relativ nur schwach bedämpft ist. Eine nennenswerte Verringerung der Einstellzeiten für die Meßwertgewinnung läßt sich hier jedoch nicht erreichen. Zu besseren Ergebnissen kommt man durch den Einsatz digitaler Filter, welche selektiv nur die Einschwingfrequenzen des mechanischen Systems unterdrücken, ohne jedoch gleichzeitig das übrige Frequenzband zu beschneiden. Bei entsprechendem Aufwand läßt sich so ein hinreichend genauer Meßwert schon nach ungefähr 6 bis 10 Schwingungen um die neue stationäre Gleichgewichtslage erreichen, noch bevor das mechanische System zur Ruhe gekommen ist.

Eine weitere Methode besteht schließlich darin, den zeitlichen Verlauf des vom Meßaufnehmer gelieferten elektrischen Meßsignals in sehr kurzen Zeitabständen abzutasten und in digitale Signalwerte umzusetzen. Bei ausreichender Kenntnis der Systemparameter, insbesondere der Trägheit des Meßobjekts und der Nachgiebigkeit der Meßfeder, ist es dann möglich, den späteren stationären Gleichgewichtszustand zunächst grob zu schätzen. Mit den so erhaltenen Schätzwerten wird dann der zugehörige Einschwingweg berechnet und ständig mit den aktuellen Einschwingwegen verglichen. Anhand dieser Vergleiche kann dann der geschätzte Meßwert immer weiter verbessert werden, bis diese Verbesserungen mit zunehmender Information nur noch so gering sind, daß der geschätzte Wert innerhalb vorgegebener Genauigkeitsgrenzen um den endgültigen tatsächlichen Meßwert liegt. Ein derartiges Schätzverfahren mittels informationsverarbeitender Elektronik setzt immer ausgezeichnete Kenntnisse der Parameter des Meßsystems voraus und erfordert einen hohen Softwareaufwand. In günstigen Fällen läßt sich ein hinreichend genauer Meßwert innerhalb von zwei bis drei Periodendauern eines wenig gedämpften mechanischen Systems erhalten.

Aufgabe der vorliegenden Erfindung ist es, ein Verfahren sowie eine Meßrichtung zur Bestimmung mechanischer Meßgrößen, insbesondere eines unbekannten Gewichts mittels wegfühlender Meßaufnehmer zu schaffen, mit denen im Vergleich zu den herkömmlichen Verfahren in deutlich kürzerer Zeit nach sprunghafter Änderung der Meßgrößen ein genauer Meßwert bestimmt werden kann.

Diese Aufgabe wird erfindungsgemäß durch ein Verfahren mit den Schritten des Patentanspruch 1 gelöst. Ferner wird diese Aufgabe durch eine Meßeinrichtung zur Bestimmung mechanischer Meßgrößen mit den Merkmalen des Patentanspruchs 6 gelöst.

Weitere vorteilhafte Ausführungsformen der Erfindung ergeben sich aus den abhängigen Patentansprüchen.

Erfindungsgemäß weist das schwingungsfähige System, bestehend aus Meßobjekt und bewegten Elementen der Meßeinrichtung, so gut wie keine geschwindigkeitsproportionale passive Dämpfung auf; stattdessen wird eine gesteuerte aktive Dämpfung zum Einsatz gebracht, welche über eine entsprechende Steuerungselektronik direkt vom Meßsignal so gesteuert wird, daß über eine oder mehrere kurze Zeitperioden hinweg starke Brems- oder Beschleunigungskräfte auf die bewegten Systemelemente in bzw. entgegen der Richtung deren momentaner Verlagerung ausgeübt werden. Durch diese kurzzeitigen, exakt dosierten Krafteinwirkungen schwingt das System in kürzestmöglicher Zeit auf eine stabile, d.h. bewegungslose Gleichgewichtslage ein, welche der veränderten Meßgröße entspricht. Mittels des erfindungsgemäßen Verfahrens bzw. der entsprechend ausgebildeten Meßeinrichtung ist es möglich, in äußerst kurzer Zeit nach einer sprunghaften Änderung der Meßgröße - im Extremfall schon nach weniger als einem Viertel der Periodendauer des ungedämpften Systems - über den Meßaufnehmer einen exakten Meßwert zu erhalten.

Die bis dahin nicht erreichbaren, extrem kurzen Einstellzeiten nach Änderung der Meßgröße prädestinieren die erfindungsgemäße Methode der gesteuerten aktiven Dämpfung insbesondere für den Einsatz bei Wägesystemen, bei denen möglichst schnell hintereinander getrennte Wägungen durchgeführt werden, wie dies beispielsweise bei Kombinations-Wägeautomaten oder Kontrollwaagen der Fall ist. Hier lassen sich wesentlich kürzere Zyklenzeiten als bisher realisieren.

Im einfachsten Falle werden die bewegten Elemente der Meßeinrichtung durch kurzzeitiges Beaufschlagen mit einer bremsenden Kraft bis zum Stillstand in ihrer neuen stationären Gleichgewichtslage abgebremst, wobei Einwirkungsdauer und Stärke dieser Bremskraft in Abhängigkeit des von den Meßaufnehmern gelieferten Meßsignals gesteuert werden. Die Bremskraft ist richtig bemessen, wenn zum Zeitpunkt des Erreichens der neuen Gleichgewichtslage das Produkt aus Bremskraft und Zeitdauer ihres Einwirkens, also dem Bremsimpuls, gleich ist der Differenz, gebildet aus dem Impuls der Schwerkraft und dem Impuls der Meßfeder, welche beide innerhalb des Zeitraums zwischen sprunghafter Änderung der Meßgröße und Erreichen der Gleichgewichtslage auf die bewegten Massen der Meßeinrichtung ausgeübt werden. Es lassen sich Einstellzeiten von nur wenig mehr als einem Viertel der Periodendauer der natürlichen Schwingung des nicht gedämpften Meßsystems erreichen.

Noch kürzere Einstellzeiten lassen sich erzielen, wenn gemäß einer vorteilhaften Weiterbildung der Erfindung die bewegten Elemente der Meßeinrichtung während eines ersten Zeitabschnitts zusätzlich zur Wirkung der Schwerkraft beschleunigt und erst anschließend während eines zweiten Zeitabschnitts bis zum Stillstand in ihrer stationären Gleichgewichtslage abgebremst werden. Die gesteuerte Beschleunigung kann bereits im Augenblick der Änderung der Meßgröße beginnen. Dabei können der Gesamtbeschleunigung des bewegten Systems natürliche Grenzen gesetzt sein. So darf beispielsweise bei einer Waage die Erdbeschleunigung nicht überschritten werden; anderenfalls würde das auf eine Waagschale aufgelegte Wägegut, deren unbekanntes Gewicht bestimmt werden soll, von seiner Unterlage abheben, wodurch sich sehr komplexe dynamische Einschwingstörungen ergeben würden. Um die zur Verfügung stehende Zeit bis zum erstmaligen Durchlaufen der Gleichgewichtslage bestmöglich auszunutzen, wird man die Beschleunigungskraft ungefähr in der Mitte des von den bewegten Elementen bis zur Gleichgewichtslage zu durchlaufenden Wegs in eine entgegengesetzt wirkende Bremskraft umkehren. Die Bewegungsenergie des Systems muß zu dem Zeitpunkt vollständig abgebaut sein, in dem die endgültige Gleichgewichtslage; welche von dem Absolutbetrag der zu bestimmenden Meßgröße abhängt, erreicht ist. Die Bemessung der Beschleunigungs- und Bremskräfte sowie deren Einwirkungsdauer haben auch hier wieder nach dem Grundsatz zu erfolgen, daß im Zeitpunkt des Erreichens der Gleichgewichtslage die Summe der Impulse beider Kräfte gleich ist der Differenz aus den Impulsen aus der Schwerkraft und der Rückstellkraft der elastisch verformten Meßfeder. Im Idealfalle lassen sich so Einstellzeiten realisieren, die sogar noch deutlich unter einem Viertel der Periodendauer des ungedämpften Meßsystems liegen.

Bei der Anwendung der Erfindung in der Praxis kann die exakte zeitliche und betragsmäßige Steuerung der Brems- bzw. Beschleunigungskräfte auf Schwierigkeiten stoßen. Außerdem wird in der Praxis der Fall der sprunghaften, gleichzeitig jedoch impulsfreien Änderung der Meßgröße nur sehr selten gegeben sein. Gemäß einer bevorzugten Ausführung der Erfindung werden deshalb die bewegten Elemente der Meßeinrichtung zunächst wiederum während eines ersten Zeitabschnitts bis zum Stillstand, allerdings außerhalb ihrer stationären Gleichgewichtslage, abgebremst, anschließend während eines zweiten Zeitabschnitts entgegen der momentanen Verlagerung beschleunigt und zuletzt während eines dritten Zeitabschnitts bis zum Stillstand in ihrer endgültigen stationären Gleichgewichtslage abgebremst. Legt man die erste Bremsphase so, daß die bewegten Elemente die sich später einstellende Gleichgewichtslage durchlaufen, noch bevor sie bis zum Stillstand abgebremst sind, so ermöglicht dies die Erkennung der Gleichgewichtslage bereits während der ersten Halbperiode des Einschwingvorgangs. Zweckmäßigerweise erfolgt die Detektion der Gleichgewichtslage mittels einer Erfassung der momentanen Beschleunigung der bewegten Elemente, welche unabhängig von der Vorgeschichte der Meßwertänderung im Zeitpunkt des Durchlaufens der späteren Gleichgewichtslage den Wert Null annimmt. Da man darüber hinaus die zum gleichen Zeitpunkt herrschende Geschwindigkeit der bewegten Elemente durch Differentiation des vom Meßaufnehmer gelieferten Meßsignals, welches ja ein Wegsignal ist, bestimmen kann, lassen sich die zur Steuerung der einwirkenden Kräfte notwendigen Parameter direkt im Anschluß an das erstmalige Durchlaufen der neuen Gleichgewichtslage sehr exakt festlegen. Nach dem Ablauf des ersten Zeitabschnitts sind die bewegten Elemente der Meßeinrichtung zwar bis zum Stillstand abgebremst; das System ist jedoch bereits über die Gleichgewichtslage hinausgeschwungen. Erfindungsgemäß wirkt deshalb die während des ersten Zeitabschnitts bremsende Kraft unverändert weiter und unterstützt jetzt als Beschleunigungskraft die Verlagerung der bewegten Elemente in umgekehrter Richtung auf die Gleichgewichtslage zu. Rechtzeitig vor Erreichen dieser Gleichgewichtslage wird die auf die bewegten Elemente einwirkende Kraft noch einmal in eine Bremskraft umgesteuert, um ein zweites Überschwingen über den Gleichgewichtszustand hinaus zu verhindern. Am Ende dieses dritten Zeitabschnitts kommt dann bei richtiger Dimensionierung der Kraftimpulse das System exakt in der Gleichgewichtslage, welcher der geänderten Meßgröße entspricht, zur Ruhe. Bei dem hier besonders interessierenden Anwendungsfall eine Waage erfolgt die Beschleunigung während des zweiten Zeitabschnitts in zur Schwerkraft entgegengesetzten Richtung, so daß hier Beschleunigungen ausgeübt werden können, welche mindestens den Wert der Endbeschleunigung erreichen und daher wesentlich wirkungsvoller sind. Die auf diese Weise erreichbaren Einstellzeiten sind etwas länger und liegen zwischen einem Viertel und drei Vierteln der Periodendauer der natürlichen Schwingung des ungedämpften Meßsystems. Dieses Verfahren hat aber dafür den großen Vorteil, von der Art der Meßgrößenänderung weitgehend unabhängig zu sein und es zu gestatten, die Brems- und Beschleunigungsimpulse sehr viel exakter dosieren zu können.

Es wird eine Ausführung der erfindungsgemäßen Meßeinrichtung bevorzugt, bei der das steuerbare Kraftglied berührungslos aus die bewegten Elemente einwirkt. Vorteilhaft ist das Kraftglied elektrisch steuerbar. Beispiele hierfür sind elektromagnetische oder elektrostatische Kraftglieder. Besonders bevorzugt wird ein Kraftglied, welches eine stromdurchflossene Spule und einen in diese eintauchenden Magnetkern umfaßt. Eines dieser beiden Bauteile ist starr mit den bewegten Elementen der Meßeinrichtung zu verbinden, während das andere Bauteil ortsfest angebracht sein muß. Die Kraftwirkung, welche von einem derartigen elektromechanischen Kraftglied ausgeübt wird, läßt sich mittels Steuerung des durch die Spule fließenden Stroms besonders leicht und exakt dosieren.

Denkbar sind jedoch auch Kraftglieder, welche ihre Kraftwirkung berührend auf die bewegten Elemente übertragen, sofern die Bewegungswiderstände geschwindigkeitsunabhängig steuerbar sind. Für Sonderfälle können auch geschwindigkeitsproportionale Dämpfungsflüssigkeiten zum Einsatz gelangen, sofern sich deren Viskosität innerhalb sehr kurzer Zeiträume, vorzugsweise auf elektrischem oder magnetischem Wege, in weiten Grenzen variieren läßt, wie dies beispielsweise bei Magnetpulversuspensionen der Fall ist.

Sofern nur Bremskräfte auf die bewegten Elemente der Meßeinrichtung ausgeübt werden sollen, genügt das Vorsehen eines einzigen Kraftglieds. Soll das bewegte System darüber hinaus zusätzlich mit Beschleunigungskräften beaufschlagt werden, so ist gemäß einer Weiterbildung der erfindungsgemäßen Meßeinrichtung ein zweites Kraftglied vorzusehen. Denkbar sind allerdings auch umsteuerbare Kraftglieder, die sowohl Beschleunigungskräfte als auch Bremskräfte zeitlich hintereinander aufbringen können.

Zur Detektion des ersten Durchlaufens der späteren Gleichgewichtslage muß, wie bei der Erläuterung des erfindungsgemäßen Meßverfahrens erwähnt, die momentane Beschleunigung der bewegten Elemente erfaßt werden. Hierzu ist in zweckmäßiger Weiterbildung der Meßeinrichtung ein Beschleunigungsaufnehmer vorzusehen, dessen elektrischer Ausgang an die elektronische Steuereinheit angeschlossen ist. Aufgrund der zusätzlichen Auswertung des von einem solchen Beschleunigungsaufnehmer abgegebenen Signals können die Brems- bzw. Beschleunigungskräfte, welche von den Kraftgliedern auf die bewegten Elemente ausgeübt werden, besonders exakt gesteuert werden.

Vorzugsweise enthält die elektronische Steuereinheit einen Mikrorechner, welcher aus dem laufend vom Meßwertaufnehmer abgegebenen Meßsignal und gegebenenfalls dem Signal des Beschleunigungsaufnehmers jeweils Zeitdauer und Betrag der auf das bewegte Systems aufgebrachten Brems- bzw. Beschleunigungskräfte errechnet.

Die Erfindung und die ihr zugrundeliegenden Gesetzmäßigkeiten und Erkenntnisse werden nachstehend anhand des Anwendungsbeispiels einer Federwaage unter Bezugnahme auf die beigefügten Zeichnungen näher erläutert. Es zeigen:

Fig. 1a      eine herkömmliche elektromechanische Federwaage mit passiver mechanischer Dämpfung, in unbelastetem Zustand, schematisch;

Fig. 1b      die Federwaage von Fig. 1a, mit aufgelegtem unbekanntem Gewicht;

Fig. 2a      das Einschwingverhalten einer Federwaage ohne Dämpfung;

Fig. 2b      das Einschwingverhalten der Federwaage gemäß Fig. 1a bei schwacher Dämpfung;

Fig. 2c      das Einschwingverhalten der Federwaage gemäß Fig. 1a bei annähernd kritischer Dämpfung;

Fig. 3a      eine Federwaage gemäß der Erfindung mit zwei elektrisch steuerbaren Kraftgliedern und einem zusätzlichen Beschleunigungsaufnehmer, in unbelastetem Zustand, schematisch;

Fig. 3b      die Federwaage von Fig. 3a, mit aufgelegtem unbekanntem Gewicht;

Fig. 4a-4d      gesteuertes Einschwingen und dabei wirkende Kräfte bei einer Federwaage gemäß Fig. 3a mit nur einem Kraftglied;

Fig. 5a-5d      gesteuertes Einschwingen und dabei wirkende Kräfte bei einer Federwaage gemäß Fig. 3a mit zwei Kraftgliedern;

Fig. 6a, 6b      gesteuertes Einschwingen und dabei wirkende Kräfte bei der Federwaage gemäß Fig. 3a mit zwei Kraftgliedern und zusätzlich vorgesehenem Beschleunigungsaufnehmer;

Fig. 7a, 7b      gesteuertes Rückstellen der Federwaage gemäß Fig. 3a.

In Fig. 1a ist de Aufbau einer herkömmlichen einfachen elektromechanischen Federwaage dargestellt. Diese weist eine Meßfeder 1 auf, welche mit ihrem oberen Ende ortsfest aufgehängt ist. Am unteren Ende der Meßfeder 1 ist eine Lastschale 2 befestigt, auf welche eine unbekanntes Gewicht 3 aufgelagert werden kann. Eine in Fallrichtung angeordnete Kolbenstange 4 ist mit der Unterseite der Lastschale 2 starr verbunden. An ihrem unteren Ende trägt die Kolbenstange 4 einen Kolben 5, der in einem mit einer viskosen Flüssigkeit gefüllten Zylinder 6 eintaucht. Fig. 1 zeigt die Federwaage in Ruhelage, also ohne aufgelegtes Meßobjekt. Eine am unteren Ende der Meßfeder angebrachte Skala 7 zeigt folglich das Gewicht "Null" an. Als Meßaufnehmer, welcher ein dem zu bestimmenden unbekannten Gewicht proportionales elektrisches Meßsignal abgibt, dient hier ein induktiver Wegaufnehmer 8, im wesentlichen gebildet von zwei in Brücke geschalteten und von Wechselstrom durchflossenen Spulen 9 und 10, einem Spulenkern 11 und einem den magnetischen Fluß schließenden Magneten 12, welcher an der Kolbenstange 4 befestigt ist.

Fig. 1b zeigt nun die Federwaage nach Auflegen des unbekannten Gewichts 3 auf die Lastschale 2. Unter der Wirkung der Masse m des zu bestimmenden Gewichts 3 hat sich die Meßfeder 1 elastisch gedehnt; die Skala 7 zeigt einen momentanen Meßwert von 3 kg an. Die Lastschale 2 hat sich um die Auslenkung $S_{(t)}$ nach unten verlagert. Das vom induktiven Wegaufnehmer 8 an seinem Ausgang abgegebene Meßsignal hat sich von $U_o$ auf den Wert $U_m$ geändert, welcher dem gemessenen Gewicht von 3 kg entspricht. Lastschale 2, Kolbenstange 4 mit Kolben 5 und Spulenkern 11 bilden als bewegte Elemente der Federwaage, zusammen mit dem aufgelegten Gewicht 3 und der elastisch verformten Meßfeder 1, ein schwingungsfähiges System. Bei plötzlicher Belastung der Lastschale 2 mit dem Gewicht 3 wird dieses System zu einer Schwingung in vertikaler Richtung angeregt, welche allmählich abklingt, bis sich die neue Gleichgewichtslage eingestellt hat. Infolge der Arbeit, welche der Kolben 5 innerhalb des flüssigkeitsgefüllten Zylinders 6 verrichtet, wird diese Schwingung geschwindigkeitsproportional gedämpft.

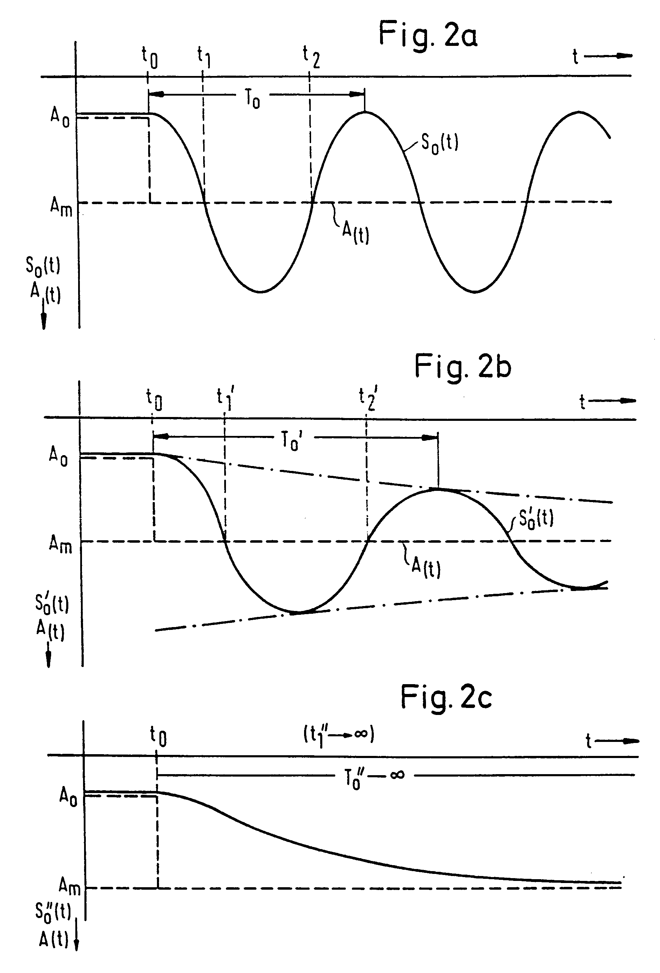

In dem Weg-Zeit-Diagramm von Fig. 2a ist der Einschwingvorgang einer Federwaage mit völlig ungedämpftem Meßsystem dargestellt. $S_{o(t)}$ gibt den zeitlichen Verlauf der Auslenkung der bewegten Elemente der Meßeinrichtung an; mit gestrichelter Linie ist der zeitliche Verlauf der Gleichgewichtslage $A_{(t)}$ eingetragen. Das unbelastete System befindet sich in seiner Ruhelage $A_o$ (vgl. Fig. 1a, 1b). Nach dem Auflegen des Gewichts m auf die Lastschale 2 verlagert sich diese unter der Wirkung der Schwerkraft nach unten. Zum Zeitpunkt $t_1$ wird die neue, dem Gewicht m entsprechende Gleichgewichtslage $A_m$ erreicht. Aufgrund der Bewegungsenergie der bewegten Elemente der Federwaage verlagern sich diese jedoch über die spätere Gleichgewichtslage $A_m$ hinaus und führen eine ungedämpfte sinusförmige Schwingung aus, deren Mittelwert mit der Gleichgewichtslage $A_m$ identisch ist. Die Periodendauer dieser Schwingung ist $T_o$.

Fig. 2b verdeutlicht den Einfluß einer relativ schwachen, geschwindigkeitsproportional Reibungsdämpfung, wie sie bei der Federwaage gemäß Fig. 1a, 1b mittels des in den flüssigkeitsgefüllten Zylinder 6 eintauchenden Kolbens 5 verwirklicht ist. Die Schwingung der bewegten Elemente des Meßsystems um die neue Gleichgewichtslage $A_m$ klingt allmählich ab und die Auslenkung $S'_{o(t)}$ erreicht nach einigen Periodendauern $T'_o$ die neue Gleichgewichtslage $A_m$. Bei diesem schwach gedämpften System ist die Periodendauer $T'_o$ deutlich größer als die Periodendauer $T_o$ des völlig unbedämpften Systems (vgl. Fig. 2a). Da der zeitliche Verlauf des vom Wegaufnehmer 8 (vgl. Fig. 1a, 1b) abgegebenen Meßsignals $U_m$ proportional der Auslenkung $S'_{o(t)}$ ist, erhält man erst nach Verstreichen einiger Periodendauern $T'_o$ einen hinreichend genauen Meßwert für das zu bestimmende Gewicht 3.

Das Diagramm von Fig. 2c verdeutlicht das Einschwingverhalten einer Federwaage, deren Meßsystem mit einer annähernd kritischen Dämpfung versehen ist. Die Auslenkung $S''_{o(t)}$ nähert sich hier nur asymptotisch und nach sehr langer Einstellzeit dem stationären Gleichgewichtszustand $A_m$.

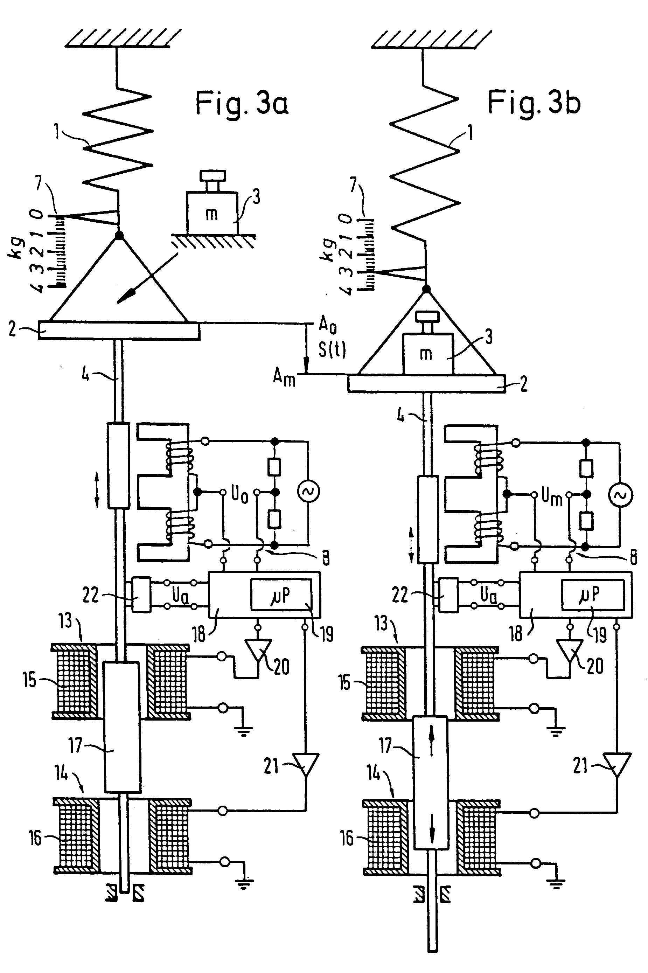

In den Fig. 3a und 3b ist nun eine Federwaage dargestellt, welche in ihrem prinzipiellen Aufbau der Federwaage gemäß Fig. 1a, 1b entspricht; anstelle der Dämpfung mittels viskoser Flüssigkeit ist hier jedoch erfindungsgemäß ein elektronisch steuerbares, aktives Dämpfungssystem vorgesehen. Am unteren Ende der mit der Lastschale 2 starr verbundenen Kolbenstange 4 sind zwei elektrisch steuerbare Kraftglieder 13 und 14 angeordnet, welche jeweils aus einer stromdurchflossenen Spule 15 bzw. 16 und einem koaxial um die Kolbenstange 4 angeordneten Magnetkern 17 aus weichmagnetischem Material, beispielsweise Ferrit, bestehen. Zur Steuerung der Kraftglieder 13, 14 ist eine Steuereinheit 18 vorgesehen, welche einen Mikrorechner 19 enthält. Mit ihrem Eingang ist diese Steuereinheit 18 mit dem Ausgang des induktiven Wegaufnehmers 8 verbunden, während ausgangsseitig die Spulen 15 und 16 jeweils getrennt voneinander angeschlossen sind. Der Verstärkung der von der Steuereinheit 18 abgegebenen Steuersignale dienen zwei Leistungsverstärker 20 und 21, welche den zum Betrieb der Spulen 15, 16 benötigten Erregerstrom liefern. Auf der Kolbenstange 4 sitzt ferner ein Beschleunigungsaufnehmer 22, der ebenfalls an die Steuereinheit 18 angeschlossen ist. In Abhängigkeit des Meßsignals $U_m$ sowie des vom Beschleunigungsaufnehmer 22 laufend abgegebenen Beschleunigungssignals errechnet der Mikrorechner 19 die für eine wirksame aktive Dämpfung der schwingungsförmigen Verlagerung der bewegten Systemelemente erforderlichen Parameter für die Erregung der Spulen 15 und 16. Je nach Ansteuerung der Spulen 15 bzw. 16 über die Leistungsverstärker 20, 21 wird der Magnetkern 17 - und damit alle bewegten Systemelemente - in vertikaler Richtung beschleunigt oder abgebremst. Dabei überträgt das Kraftglied 14 ausschließlich Kräfte in Richtung der Erdanziehung und das Kraftglied 13 nur Kräfte engegengesetzt der Erdanziehung auf den Magnetkern 17 bzw. die damit verbundene Kolbenstange 4. Bei einer vereinfachten Ausführung umfaßt das aktive Dämpfungssystem nur ein einziges Kraftglied 13, welches ausschließlich Kräfte entgegen der Erdanziehung auszuüben vermag.

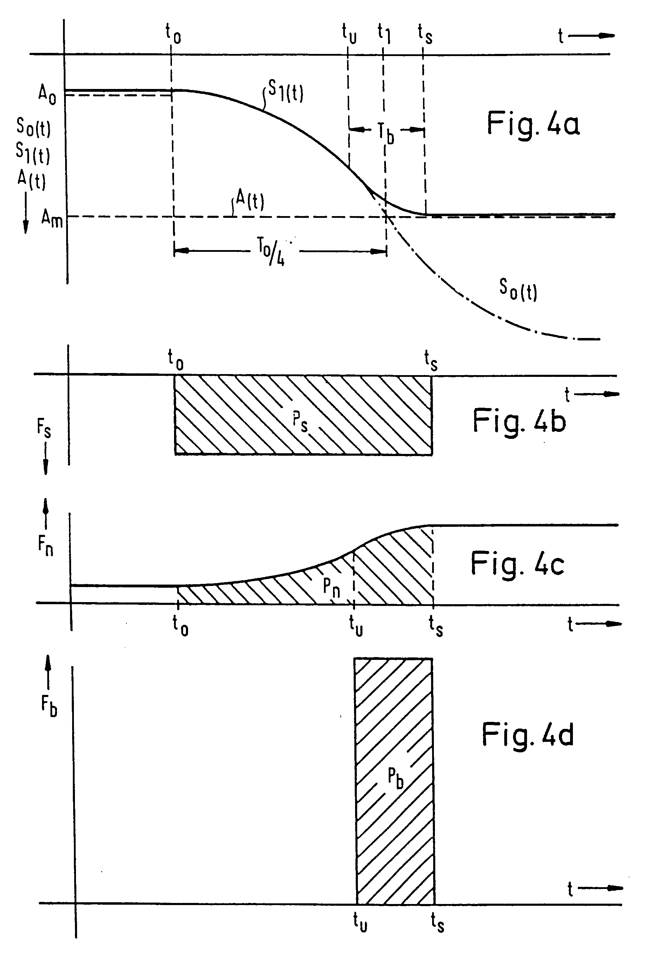

In Fig. 4a ist der zeitliche Verlauf der Auslenkung $S_{1(t)}$ der Lastschale 2 einer Federwaage gemäß Fig. 3a, 3b nach Auflegen eines Gewichts 3 auf die Lastschale 2 dargestellt, wobei in diesem Falle angenommen ist, daß nur ein einziges Kraftglied 13, welches Kräfte entgegengesetzt zur Erdanziehung auszuüben vermag, vorhanden ist.

In Fig. 4b ist der von der Schwerkraft zwischen Auflegen des Gewichts 3 zum Zeitpunkt $t_o$ und dem Zeitpunkt $t_s$ des Erreichens der stationären Gleichgewichtslage $A_m$ auf die bewegten Elemente der Federwaage ausgeübte Impuls $P_s$ eingetragen. Aus Fig. 4c ist der zwischen $t_o$ und $t_s$ von der Meßfeder 1 auf die bewegten Massen ausgeübte Impuls $P_n$ zu entnehmen. Der in Fig. 4d eingetragene Bremsimpuls $P_b$ verdeutlicht die vom Kraftglied 13 (vgl. Fig. 3a, 3b) auf die Kolbenstange 4 mit Lastschale 2 und aufgelegtem Gewicht 3 ausgeübte Kraftwirkung.

Auf die bis dahin in ihrer Ruhelage $A_o$ befindliche Lastschale 2 wird das zu messende Gewicht 3 mit der Masse m zum Zeitpunkt $t_o$ impulsfrei aufgelegt. Aufgrund der Wirkung der Schwerkraft $F_s$ beginnt sich die Lastschale 2 nach unten zu verlagern, wobei die von der Meßfeder 1 ausgeübte Kraft $F_n$ dieser Verlagerung zunehmend entgegenwirkt. Würde das System unbedämpft betrieben werden, so würde sich ein zeitlicher Verlauf der Auslenkung $S_0(t)$ gemäß der im Diagramm von Fig. 4a strichtpunktiert eingezeichneten Linie ergeben. Der tatsächliche Verlauf des Einschwingvorgangs, also die Augenblickswerte der Auslenkung $S_{1(t)}$ der Lastschale 2 werden vom Wegaufnehmer 8 laufend erfaßt und stehen in Form des Meßsignals $U_m$ der elektronischen Steuereinheit 18 zur Verfügung. Unter Berücksichtigung des Meßsignals $U_m$ und anhand eines abgespeicherten Programms errechnet der in der Steuereinheit 18 enthaltene Mikrorechner 19 Zeitdauer und Stärke des Erregerstroms, welcher der Spule 15 des Kraftglieds 13 zugeführt wird. Zum Einschaltzeitpunkt $t_u$ beginnt somit das Kraftglied 13, eine Bremskraft auf die bewegten Massen auszuüben, welche die Auslenkung $S_{1(t)}$ noch vor erstmaligem Durchlaufen der neuen Gleichgewichtslage $A_m$ vollständig abbremst, so daß das System zum Zeitpunkt $t_s$ zur Ruhe kommt. Die von $t_o$ bis $t_s$ dauernde Einstellzeit der Federwaage beträgt somit nur unwesentlich mehr als ein Viertel der Periodendauer $T_o$ des umgedämpften

Systems. Ab dem Zeitpunkt $t_s$ liefert der Wegaufnehmer 8 einen exakten Meßwert für die Masse m des zu bestimmenden Gewichts 3.

Für die Bemessung des Bremsimpulses $P_b$ gilt der formelmäßige Zusammenhang:

$$P_b = P_s - P_n$$

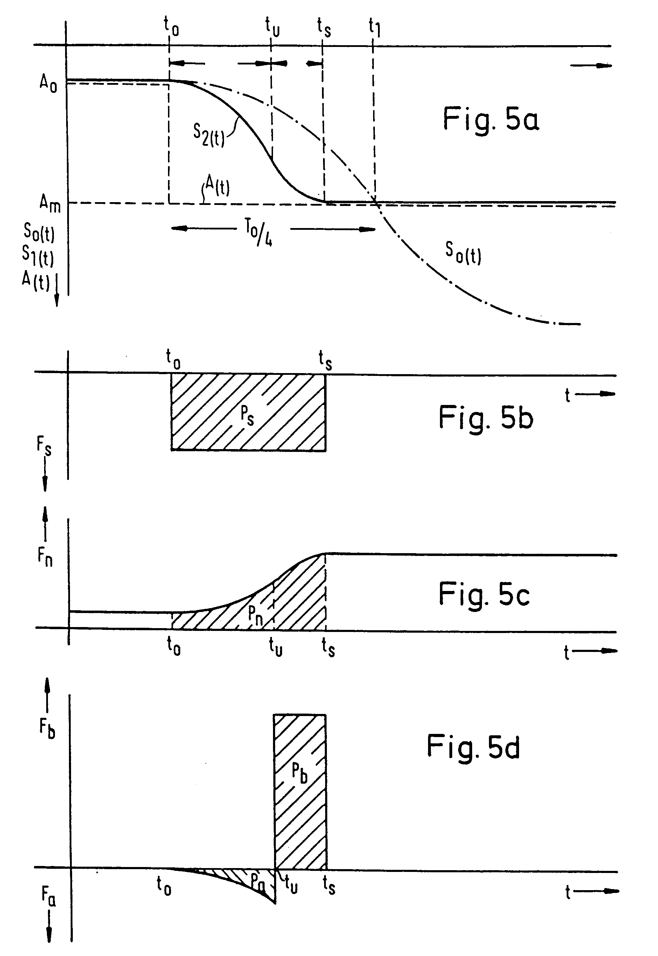

Sind gemäß den Fig. 3a, 3b zwei Kraftglieder 13 und. 14 vorgesehen, von denen eines entgegen und das andere in Richtung der Erdanziehung wirkt, so läßt sich durch gesteuerte Erregung der beiden zugehörigen, stromdurchflossenen Spulen 15 bzw. 16 das im Diagramm von Fig. 5a dargestellte Einstellverhalten realisieren. Den Fig. 5b und 5c lassen sich wiederum die von der Schwerkraft $F_s$ und der Kraft $F_n$ der Meßfeder 1 auf die bewegten Massen der Federwaage ausgeübten Impulse $P_s$ bzw. $P_n$ entnehmen.

Gesteuert von der Steuereinheit 18 wird die Spule 16 des zusätzlichen Kraftglieds 14 bereits zum Zeitpunkt $t_o$, also unmittelbar nach Auflegen des Gewichts 3 auf die Lastschale 2, erregt, wodurch die bewegten Massen mit dem in Fig. 5d eingetragenen Beschleunigungsimpuls $P_a$ beaufschlagt werden. Die Auslenkung $S_{2(t)}$ der Lastschale 2 vollzieht sich also nicht nur unter der Wirkung der Schwerkraft $F_s$, sondern wird zusätzlich von der Beschleunigungskraft $F_a$ unterstützt. Zum Umsteuerzeitpunkt $t_u$ wird der Erregerstrom durch die Spule 16 abgeschaltet und stattdessen die Spule 15 des Kraftglieds 13 erregt, wodurch eine starke Bremskraft $F_b$ entgegen der Erdanziehung und damit hier auch entgegen der momentanen Verlagerungsrichtung auf die bewegten Massen ausgeübt wird. Bereits zum Zeitpunkt $t_s$, also noch vor dem theoretischen erstmaligen Durchlaufen der neuen Gleichgewichtslage $A_m$ des völlig ungedämpft betriebenen Systems, ist der Einstellvorgang abgeschlossen; die momentane Auslenkung $S_{2(t)}$ der bewegungslosen Lastschale 2 stimmt mit der Gleichgewichtslage $A_m$ überein. Die hierzu benötigte Einstellzeit beträgt deutlich weniger als ein Viertel der Periodendauer $T_o$ der ungedämpften Schwingung.

Für die Bemessung der Beschleunigungs- und Bremsimpulse gilt:

$$P_a + P_b = P_s - P_n$$

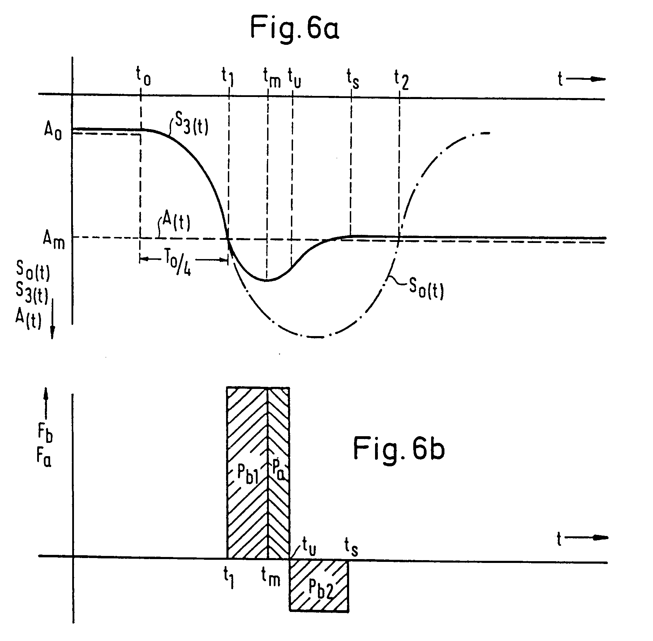

Die Fig. 6a und 6b geben eine weitere Alternative des aktiv gesteuerten Einschwingens einer Federwaage an, welches trotz des sich ergebenden, etwas späteren Einstellzeitpunkts $t_s$ in der Praxis Vorteile hat. Mittels des zusätzlich auf der Kolbenstange 4 angeordneten Beschleunigungsaufnehmers 22 (vgl. Fig. 3a, 3b) wird das erstmalige Durchlaufen der Gleichgewichtslage $A_m$ detektiert.

Die zu diesem Zeitpunkt $t_1$ herrschende Momentangeschwindigkeit, mit der sich die Lastschale 2 nach unten verlagert, läßt sich durch Differentiation des vom Wegaufnehmer 8 gelieferten Meßsignals $U_m$ bestimmen.Anhand der jetzt vorliegenden Informationen kann der Mikrorechner 19 die erforderlichen Brems- bzw. Beschleunigungskräfte $F_b$, $F_a$ sehr exakt festlegen. Während der Zeit zwischen $t_1$ und $t_m$ wird die Spule 15 des Kraftglieds 13 erregt, wobei in $t_m$ die Geschwindigkeit der bewegten Elemente vollständig abgebaut ist, ohne daß die Lastschale 2 allerdings die vorgesehene Gleichgewichtslage $A_m$ erreicht hätte. Zwischen $t_m$ und $t_u$ übt deshalb das entgegen der Erdanziehung weiterhin noch wirkende Kraftglied 13 jetzt eine Beschleunigungskraft $F_a$ aus, welche gleichsinnig wie die Rückstellkraft der über ihre Gleichgewichtslage hinaus überdehnten Feder am bewegten System angreift. Rechtzeitig vor Erreichen der Gleichgewichtslage $A_m$ werden zum Zeitpunkt $t_u$ die Kraftglieder 13, 14 umgeschaltet, d.h. die Spule 16 des in Richtung der Erdanziehung wirkenden Kraftglieds 14 erregt, so daß in dieser Bewegungsphase die Bewegung abgebremst wird. Im Zeitpunkt $t_s$ ist das System bewegungslos und nimmt die Lastschale 2 die dem Gewicht 3 entsprechende neue Gleichgewichtslage $A_m$ ein. Die erreichbaren Einstellzeiten liegen hier zwischen einem Viertel und drei Vierteln der Periodendauer $T_o$ der ungedämpften Schwingung. Dafür ist aber diese Art der Einstellung weitgehend unabhängig von der Art der Auflage des Gewichts 3 auf die Lastschale 2 und gestattet eine außerordentlich zielgerechte und exakte Bemessung der Brems- und Beschleunigungsimpulse $P_b$, $P_a$. Dies gilt insbesondere auch für den allgemeinen Betriebsfall einer mit einem Anfangsimpuls behafteten Lastauflage.

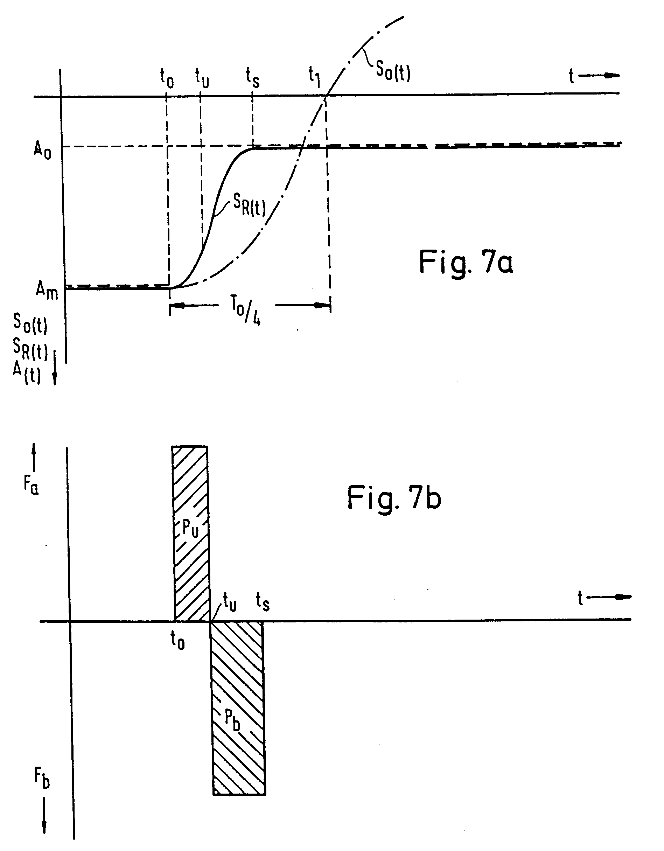

In den Fig. 7a und 7b ist dargestellt, wie die Federwaage gemäß den Fig. 3a, 3b innerhalb extrem kurzer Zeit nach Abnehmen des gemessenen Gewichts 3 von der Lastschale 2 in seine Ruhelage zurückgestellt werden kann. Es sei angenommen, daß zum Zeitpunkt $t_o$ das bis dahin auf der Lastschale 2 stationär lastende Gewicht 3 schlagartig abgenommen wird. Die Federkraft der auseinandergezogenen Meßfeder 1 beschleunigt daraufhin augenblicklich die Lastschale 2 in Richtung ihrer Ruhelage $A_o$. Hierbei wird sie von einem Bremsimpuls $P_a$ unterstützt, welcher vom Kraftglied 13 entgegengesetzt zur Erdanziehung auf die Kolbenstange 4 übertragen wird. Im Zeitpunkt $t_u$ wird auf das andere Kraftglied 14 umgesteuert, welches bis zum Zeitpunkt $t_s$ einen Bremsimpuls $P_b$ erzeugt. Bereits lange vor dem natürlichen Erreichen der Ruhelage $A_o$ beim ungedämpften System erreicht die Lastschale 2 so im Zeitpunkt $t_s$ ihre Ruhelage $A_o$.

## Patentansprüche

1. Verfahren zur Bestimmung mechanischer Meßgrößen, insbesondere eines unbekannten Gewichts durch eine gesteuerte aktive Dämpfung, umfassend die Schritte:

   a) Elastisches Verformen einer Meßfeder (1) unter dem Einfluß der zu bestimmenden Meßgröße (3);

   b) Umformen der mechanischen Meßgröße in ein proportionales elektrisches Meßsignal mittels eines Meßaufnehmers (8);

   c) Dämpfen der bei sprunghafter Änderung der Meßgröße auftretenden, schwingungsförmigen Verlagerung von bewegten Elementen (2, 4) einer Meßeinrichtung durch Beaufschlagen mit parallel zur Richtung der Verlagerung wirkenden, jedoch zur Verlagerungsgeschwindigkeit nicht proportionalen Kräften;

   d) Steuern der einwirkenden Kräfte in Abhängigkeit vom Meßsignal;

   e) Erfassen des zeitlichen Verlaufs der Verlagerung der bewegten Elemente (2, 4) im Anschluß an die sprunghafte Änderung der Meßgröße;

   f) Errechnen von Zeitdauer und Stärke von zur Einstellung einer neuen stationären Gleichgewichtslage voraussichtlich erforderlichen Kraftimpulse anhand der erfaßten Meßwerte;

   g) kurzzeitiges Beaufschlagen der bewegten Elemente (2, 4) mit einem oder mehreren Kraftimpulsen der errechneten Zeitdauer und Stärke; und

   h) Einstellen der Kraftimpulse, sobald die neue stationäre Gleichgewichtslage erreicht ist.

2. Verfahren nach Anspruch 1, dadurch gekennzeichnet, daß die bewegten Elemente (2, 4) der Meßeinrichtung bis zum Stillstand in die neue stationäre Gleichgewichtslage gebremst werden.

3. Verfahren nach Anspruch 1 oder 2, dadurch gekennzeichnet, daß die bewegten Elemente (2, 4) der Meßeinrichtung während eines ersten Zeitabschnitts beschleunigt und anschließend während eines zweiten Zeitabschnitts bis zum Stillstand in die neue stationäre Gleichgewichtslage abgebremst werden.

4. Verfahren nach Anspruch 1, dadurch gekennzeichnet, daß die bewegten Elemente (2, 4) der Meßeinrichtung während eines ersten Zeitabschnitts außerhalb ihrer stationären Gleichgewichtslage bis zum Stillstand abgebremst werden, anschließend während eines zweiten Zeitabschnitts entgegen der momentanen Verlagerung beschleunigt und zuletzt während eines dritten Zeitabschnitts bis zum Stillstand in ihrer neuen stationären Gleichgewichtslage abgebremst werden.

5. Verfahren nach Anspruch 4, dadurch gekennzeichnet, daß die momentane Beschleunigung der bewegten Elemente (2, 4) erfaßt und bei der Steuerung der einwirkenden Kräfte berücksichtigt wird.

6. Meßeinrichtung zur Bestimmung mechanischer Meßgrößen, insbesondere eines unbekannten Gewichts, umfassend:

    a) eine Meßfeder (1), die sich unter dem Einfluß der zu bestimmenden Meßgröße elastisch verformt;

    b) einen Meßaufnehmer (8), der die mechanische Meßgröße in ein proportionales elektrisches Meßsignal ($U_m$) umformt;

    c) eine Dämpfungseinrichtung zur Dämpfung der bei sprunghafter Änderung der Meßgröße auftretenden, schwingungsförmigen Verlagerung von bewegten Elementen (2, 4) der Meßeinrichtung mittels wenigstens eines steuerbaren Kraftglieds (13, 14) zur Beaufschlagung der bewegten Elemente (2, 4) mit parallel zur Richtung der Verlagerung wirkenden, jedoch zur Verlagerungsgeschwindigkeit nicht proportionalen Kräften; und

    d) eine Steuereinheit, die eingangsseitig mit dem Meßaufnehmer (8) und ausgangsseitig mit dem Kraftglied (13, 14) verbunden ist,

      - zur Steuerung der einwirkenden Kräfte in Abhängigkeit vom Meßsignal;

      - zur Erfassung des zeitlichen Verlaufs der Verlagerung der bewegten Elemente (2, 4) im Anschluß an die sprunghafte Änderung der Meßgröße;

      - zur Berechnung von Zeitdauer und Stärke von zur Einstellung einer neuen Gleichgewichtslage voraussichtlich erforderlichen Kraftimpulsen anhand der erfaßten Meßwerte;

      - zur kurzzeitigen Beaufschlagung der bewegten Elemente (2, 4) mit einem oder mehreren Kraftimpulsen der berechneten Zeitdauer und Stärke; und

      - zur Einstellung der Kraftimpulse, sobald die neue stationäre Gleichgewichtslage erreicht ist.

7. Meßeinrichtung nach Anspruch 6, dadurch gekennzeichnet, daß die Steuereinheit zur Erfassung des zeitlichen Verlaufs der Lageänderung der bewegten Elemente (2, 4) einen Beschleunigungsaufnehmer (22) umfaßt.

8. Meßeinrichtung nach Anspruch 6 oder 7, dadurch gekennzeichnet, daß das Kraftglied (13, 14) berührungslos auf die bewegten Elemente (2, 4) einwirkt.

9. Meßeinrichtung nach Anspruch 8, dadurch gekennzeichnet, daß das Kraftglied (13, 14) elektrisch steuerbar ist.

10. Meßeinrichtung nach Anspruch 9, dadurch gekennzeichnet, daß das Kraftglied (13, 14) eine stromdurchflossene Spule (15, 16) und einen in diese eingetauchten Magnetkern (17) umfaßt.

11. Meßeinrichtung nach einem der Ansprüche 6 bis 10, dadurch gekennzeichnet, daß zwei Kraftglieder (13, 14) vorgesehen sind, von denen das erste (13) Beschleunigungskräfte und das zweite (14) Bremskräfte auf die bewegten Elemente (2, 4) überträgt.

**Claims**

1. Method for determining mechanical unknowns, in particular an unknown weight by controlled active damping, including the steps of:

    a) elastically deforming a measuring spring (1) under the influence of the unknown (3) to be determined;

    b) converting the mechanical unknown to a proportional electrical measurement signal by means of a transducer (8);

    c) damping the oscillation-like displacement of moving parts (2, 4) of a measuring device which occurs in case of a sudden variation in the unknown, by applying forces which act parallel to the direction of displacement but are not proportional to the speed of displacement;

    d) controlling the acting forces as a function of the measurement signal;

    e) detecting the trend in time of displacement of the moving parts (2, 4) following the sudden variation in the unknown;

    f) calculating the duration and intensity of momenta which are probably necessary for adjustment of a new steady position of equilibrium, with the aid of the measured values detected;

    g) subjecting the moving parts (2, 4) for a short time to one or more momenta with the calculated duration and intensity; and

    h) adjusting the momenta as soon as the new steady position of equilibrium is reached.

2. Method according to claim 1, characterised in that the moving parts (2, 4) of the measuring device are braked until they stop in the new steady position of equilibrium.

3. Method according to claim 1 or 2, characterised in that the moving parts (2, 4) of the measuring device are accelerated during a first period of time and then braked during a second period of time until they stop in the new steady position of equilibrium.

4. Method according to claim 1, characterised in that the moving parts (2, 4) of the measuring device are braked during a first period of time to a standstill outside their steady position of equilibrium, then accelerated during a second period of time contrary to the instantaneous displacement, and lastly braked during a third period of time until they stop in their new steady position of equilibrium.

5. Method according to claim 4, characterised in that the instantaneous acceleration of the moving parts (2, 4) is detected and taken into consideration during control of the acting forces.

6. Measuring device for determining mechanical unknowns, in particular an unknown weight, including:
   a) a measuring spring (1) which is elastically deformed under the influence of the unknown to be measured;
   b) a transducer (8) which converts the mechanical unknown to a proportional electrical measurement signal ($U_m$);
   c) a damping device for damping the oscillation-like displacement of moving parts (2, 4) of the measuring device which occurs in case of a sudden variation of the unknown, by means of at least one controllable pilot (13, 14) for subjecting the moving parts (2, 4) to forces which act parallel to the direction of displacement but are not proportional to the speed of displacement; and
   d) a control unit which is connected to the transducer (8) on the input side and to the pilot (13, 14) on the output side,
   - for controlling the acting forces as a function of the measurement signal;
   - for detecting the trend in time of displacement of the moving parts (2, 4) following the sudden variation in the unknown;
   - for calculating the duration and intensity of momenta which are probably necessary for adjustment of a new position of equilibrium, with the aid of the measured values detected;
   - for subjecting the moving parts (2, 4) for a short time to one or more momenta with the calculated duration and intensity; and
   - for adjusting the momenta as soon as the new steady position of equilibrium is reached.

7. Measuring device according to claim 6, characterised in that the control unit for detecting the trend in time of the variation in position of the moving parts (2, 4) includes an acceleration pick-up (22).

8. Measuring device according to claim 6 or 7, characterised in that the pilot (13, 14) acts on the moving parts (2, 4) without contact.

9. Measuring device according to claim 8, characterised in that the pilot (13, 14) is electrically controllable.

10. Measuring device according to claim 9, characterised in that the pilot (13, 14) includes a current-carrying coil (15, 16) and a magnetic core (17) inserted in the latter.

11. Measuring device according to any of claims 6 to 10, characterised in that two pilots (13, 14) are provided, of which the first one (13) transmits acceleration forces and the second one (14) braking forces to the moving parts (2, 4).

**Revendications**

1. Méthode de détermination de grandeur de mesure mécanique, en particulier un poids inconnu, au moyen d'un amortissement actif commandé, comprenant les étapes suivantes :
   a) Déformation élastique d'un ressort de mesure (1) sous l'influence de la grandeur de mesure (3) à déterminer;
   b) conversion de la grandeur de mesure mécanique en un signal de mesure électrique proportionnel au moyen d'un capteur de mesure (8);
   c) amortissement du déplacement oscillatoire, se produisant lors de la variation brusque de la grandeur de mesure, d'éléments (2, 4) déplacés d'un dispositif de mesure, par sollicitation à l'aide d'efforts agissant parallèlement à la direction du déplacement, cependant non proportionnels à la vitesse de déplacement;

d) commande des efforts en action, en fonction du signal de mesure;

e) acquisition de l'évolution temporelle du déplacement des éléments (2, 4) déplacés, suite à la variation brusque de la grandeur de mesure;

f) calcul de la durée et de l'intensité des impulsions de force, probables nécessaires pour régler une nouvelle position d'équilibre stationnaire,

g) brève sollicitation des éléments (2, 4) déplacés avec une ou plusieurs impulsions de force, présentant la durée et l'intensité calculées; et

h) réglage des impulsions de force, dès que la nouvelle position d'équilibre stationnaire est atteinte.

2. Méthode selon la revendication 1, caractérisée en ce que les éléments (2, 4) déplacés du dispositif de mesure sont freinés jusqu'à l'arrêt dans la nouvelle position d'équilibre stationnaire.

3. Méthode selon la revendication 1 ou 2, caractérisée ce que les éléments (2, 4) déplacés du dispositif de mesure sont accélérés pendant un premier intervalle de temps, puis freinés pendant un deuxième intervalle de temps, jusqu'à l'arrêt dans la nouvelle position d'équilibre stationnaire.

4. Méthode selon la revendication 1, caractérisée ce que les éléments (2, 4) déplacés du dispositif de mesure sont freinés pendant un premier intervalle de temps, hors de leurs positions d'équilibre stationnaires, jusqu'à l'arrêt, puis accélérés, pendant un deuxième intervalle de temps, à l'encontre du déplacement instantanée et, enfin, freinés pendant un troisième intervalle de temps, jusqu'à l'arrêt dans leurs nouvelle position d'équilibre stationnaire.

5. Méthode selon les revendication 4, caractérisée ce que l'accélération instantanée des éléments (2, 4) déplacés est mesurée et prise en compte lors de la commande des efforts en action.

6. Dispositif de mesure pour la détermination de grandeur de mesure mécanique, en particulier un poids inconnu, comprenant :

a) un ressort de mesure (1) se déformant élastiquement sous l'influence de la grandeur de mesure à déterminer;

b) un capteur de mesure (8) convertissant la grandeur de mesure mécanique en un signal de mesure ($U_m$) électrique proportionnel;

c) un dispositif amortisseur pour amortir le déplacement oscillatoire, se produisant lors d'une variation brusque de la grandeur de mesure, d'éléments (2, 4) déplacés du dispositif de mesure, au moyen d'au moins un organe applicateur de force (13, 14), susceptible d'être commandé, pour solliciter les éléments (2, 4) déplacés avec des efforts agissant parallèlement à la direction du déplacement, mais cependant non proportionnels à la vitesse de déplacement; et

d) une unité de commande, reliée, côté entrée, au capteur de mesure (8) et, côté sortie, à l'organe applicateur de force (13, 14),

- pour opérer la commande des efforts en action, en fonction du signal de mesure;

- pour appréhender l'évolution temporelle du déplacement des éléments (2, 4) déplacés, suite à la modification brusque de la grandeur de mesure;

- pour opérer le calcul de la durée et de l'intensité des impulsions de force, probablement nécessaire à l'établissement d'un nouvel équilibre, à l'aide des valeurs de mesure acquises;

- pour solliciter brièvement les éléments (2, 4) déplacés, avec une ou plusieurs impulsions de force présentant la durée et l'intensité calculées; et,

- pour régler les impulsions de force dès que la nouvelle position d'équilibre stationnaire est atteinte.

7. Dispositif de mesure selon la revendication 6, caractérisé ce que l'unité de commande destinée à l'acquisition de l'évolution temporelle de la variation de position des éléments (2, 4) déplacés comprend un capteur d'accélération (22).

8. Dispositif de mesure selon la revendication 6 ou 7, caractérisé ce que l'organe applicateur de force (13, 14) agit sans contact sur les éléments (2, 4) déplacés.

9. Dispositif de mesure selon la revendication 8, caractérisé ce que l'organe applicateur de force (13, 14) peut être commandé électriquement.

10. Dispositif de mesure selon la revendication 9, caractérisé ce que l'organe applicateur de force (13, 14) comprend une bobine (15, 16) parcourue par un courant ainsi qu'un noyau magnétique (17) plongé dans celle-ci.

11. Dispositif de mesure selon l'une des revendications 6 à 10, caractérisé ce que deux organes applicateur de force (13, 14) sont prévus, dont le premier (13) transmet les efforts d'accélération et le deuxième (14) transmet les efforts de freinage aux éléments (2, 4) déplacés.

Fig. 1a

Fig. 1b

## Fig. 2a

$t$ →

$t_0$  $t_1$  $t_2$

$T_0$

$A_0$

$S_0(t)$

$A_m$

$A_{(t)}$

$S_0(t)$
$A_{(t)}$

## Fig. 2b

$t$ →

$t_0$  $t_1'$  $t_2'$

$T_0'$

$A_0$

$S_0'(t)$

$A_m$

$A_{(t)}$

$S_0'(t)$
$A_{(t)}$

## Fig. 2c

$t$ →

$t_0$  $(t_1'' \rightarrow \infty)$

$T_0'' \rightarrow \infty$

$A_0$

$A_m$

$S_0''(t)$
$A_{(t)}$

Fig. 3a

Fig. 3b

Fig. 4a

Fig. 4b

Fig. 4c

Fig. 4d

Fig. 5a

$S_2(t)$

$A(t)$

$S_0(t)$

$T_0/4$

$A_0$

$A_m$

$S_0(t)$
$S_1(t)$
$A(t)$

$t_0$  $t_u$  $t_s$  $t_1$

Fig. 5b

$F_s$

$P_s$

$t_0$  $t_s$  $t$

Fig. 5c

$F_n$

$P_n$

$t_0$  $t_u$  $t_s$  $t$

Fig. 5d

$F_b$

$P_b$

$P_a$

$F_a$

$t_0$  $t_u$  $t_s$  $t$

## Fig.6a

## Fig. 6b

Fig. 7a

Fig. 7b